# EUROPEAN PATENT APPLICATION

(11) **EP 2 520 550 A1**
(43) Date of publication of application: **07.11.2012**
(21) Application number: 12173792.8
(22) Date of filing: 26.04.2012
(51) Int. Cl.: C03B 33/023, C03B 33/03, C03B 33/037, B65G 49/06

(54) **Machine for cutting a plate of laminated glass**

(30) Priority: 28.04.2011 IT TO20110370
(62) Divisional of application: 12165626.8
(71) Applicant: Biesse S.p.A., 61122 Chiusa di Ginestreto (Pesaro Urbino) (IT)
(72) Inventor: Sideri, Paolo, 61122 Chiusa di Ginestreto (Pesaro Urbino) (IT); Aimar, Giacomo, 61122 Chiusa di Ginestreto (Pesaro Urbino) (IT)
(74) Representative: Notaro, Giancarlo

(57) **Abstract**

A machine for cutting a plate (G) of laminated glass, comprises a conveying surface (A) for conveying the plate of laminated glass (G) and the portions cut therefrom, provided with means (B) for feeding the plate (G) or portions of plate thereon in a longitudinal direction (L) of the machine. A cutting bridge (P1) is set in a fixed position over the conveying surface (A) and transverse with respect to said longitudinal direction (L) for carrying out operations of cutting of the plate (G) along a cutting line (p₁) of the machine, transverse with respect to said longitudinal direction (L). The machine further comprises a waiting section (W) located after the cutting bridge (P1), and including a rack (10) defining a number of superimposed compartments vertically spaced from each other. The rack (10) is vertically displaceable, so as to bring any of the compartments at the level of the conveying surface, for accumulating a plurality of portions of plate on the compartments.

## Description

### Field of the invention

The present invention relates to machines for cutting plates of laminated glass, of the type comprising two plates of glass set on top of one another with a sheet of synthetic material set between them.

In machines designed for cutting plates of laminated glass of this type, a conveying surface is provided for conveying the laminated plate and the portions cut therefrom, said conveying surface being provided with means for feeding the plate or the portions of plate thereon in a longitudinal direction of the machine. The machine further comprises one or more cutting bridges set in a fixed position over the conveying surface and set transverse with respect to the aforesaid longitudinal direction, for carrying out the operations necessary for cutting the plate along a cutting line of the machine set transverse with respect to the aforesaid longitudinal direction. Typically, each of said cutting bridges is provided with a top scoring tool and a bottom scoring tool, which are mobile in said transverse direction, for scoring, respectively, the top plate of glass and the bottom plate of glass forming part of the laminated plate. Each cutting bridge is moreover provided with means for heating the sheet of synthetic material locally after scoring of the top and bottom plates of glass in order to be able to carry out breakout and complete separation of the two portions of plate of laminated glass. Machines of this type are, for example, described and illustrated in EP 0 503 647 A, EP 1 975 131 A, and EP 0 807 609 A.

### Prior art

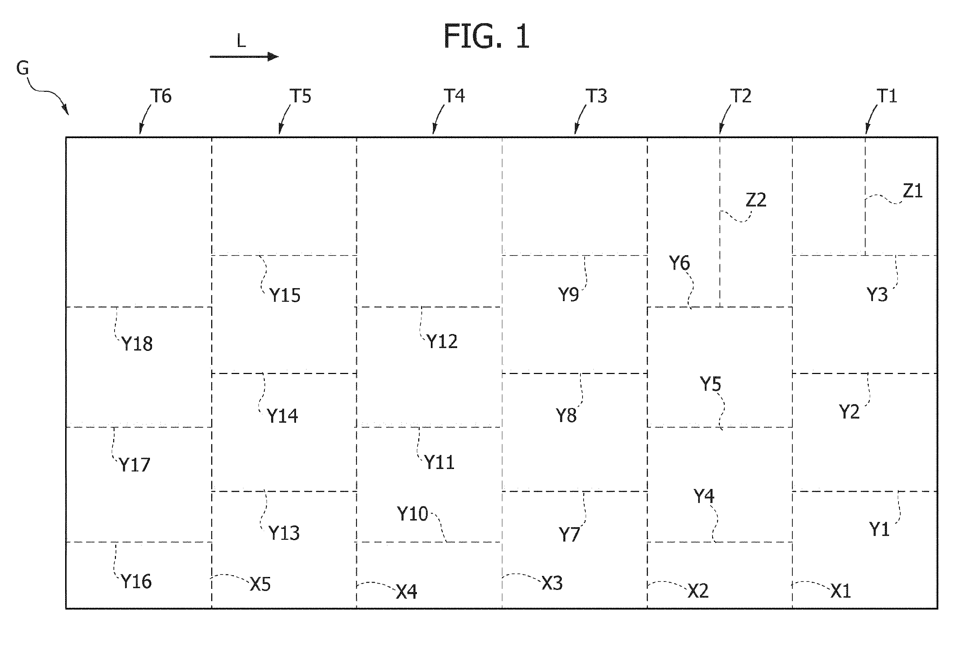

Figure 1 of the annexed plates of drawings shows a schematic plan view of a plate of laminated glass G, in which the lines along which the plate is to be divided to define a plurality of smaller laminated plates, have been indicated with dashed lines. The lay-out of the scoring lines is optimized in order to exploit in the best way possible the surface of the plate G. The plate G is designed to advance in the machine in a direction parallel to its longitudinal direction, designated by L in Figure 1. As may be seen in Figure 1, the laminated plate G is designed to undergo primary cuts X1, X2, X3, X4, X5 in directions X transverse with respect to the longitudinal direction L, to define a plurality of transverse portions of plate, or cross portions, T1, T2, T3, T4, T5, T6.

Each of the cross portions is to be in turn divided into a number of portions by means of a plurality of secondary cuts in the direction Y and, if necessary, also in the direction Z.

As may be seen, in the case of the example illustrated in Figure 1, there are envisaged five primary cuts X1-X5, eighteen secondary cuts in Y (Y1-Y18), and two secondary cuts in Z (Z1, Z2), so as to divide the entire plate G into twenty-six portions of plate.

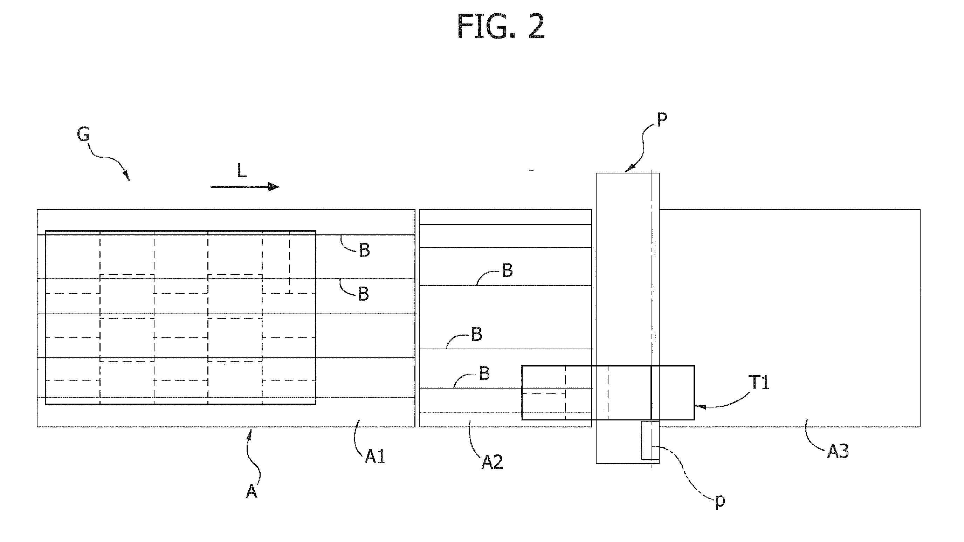

Figure 2 of the annexed plates of drawings is a schematic plan view of a machine according to the known art that can be used for cutting a plate of laminated glass. The machine, designated as a whole by the reference M, comprises a conveying surface designated as a whole by A, typically constituted by a plurality of successive and adjacent sections A1, A2, A3, provided with conveying means (typically a plurality of endless conveyor belts B) for feeding in the longitudinal direction L the plate of laminated glass G resting on the surface A. Figure 2 shows a machine of the simpler type, comprising a single cutting bridge P of the type that has been described above, designed for carrying out an operation of cutting of the plate of laminated glass along a cutting line "p", represented with a dashed line in the figure, which is fixed with respect to the machine.

Figure 2 shows the machine in the condition in which a first cutting operation has already been carried out on the plate G so as to define a first cross portion T1. Said figure shows the remaining part of the plate G that has been made to recede (i.e., shifted to the left, as viewed in the figure) with respect to the cutting line p, so as to enable rotation of the cross portion T1 through 90° in order to set it parallel to the longitudinal direction L in view of subdividing it by the cuts Y1, Y2, Y3.

Rotation through 90° of the cross portion T1 is performed manually in simpler machines and automatically in more advanced machines provided with suction-pad gripping devices that engage the cut portion of plate, for example, from beneath, and impart a rotation through 90° thereon.

As is evident, in known machines of the type illustrated in Figure 2, a single cutting bridge P is used for carrying out on the plate of laminated glass G the cuts X, the cuts Y, and the cuts Z (after prior rotation of the portion of plate to be cut so as to set it in the desired direction with reference to the cutting line p, which is fixed).

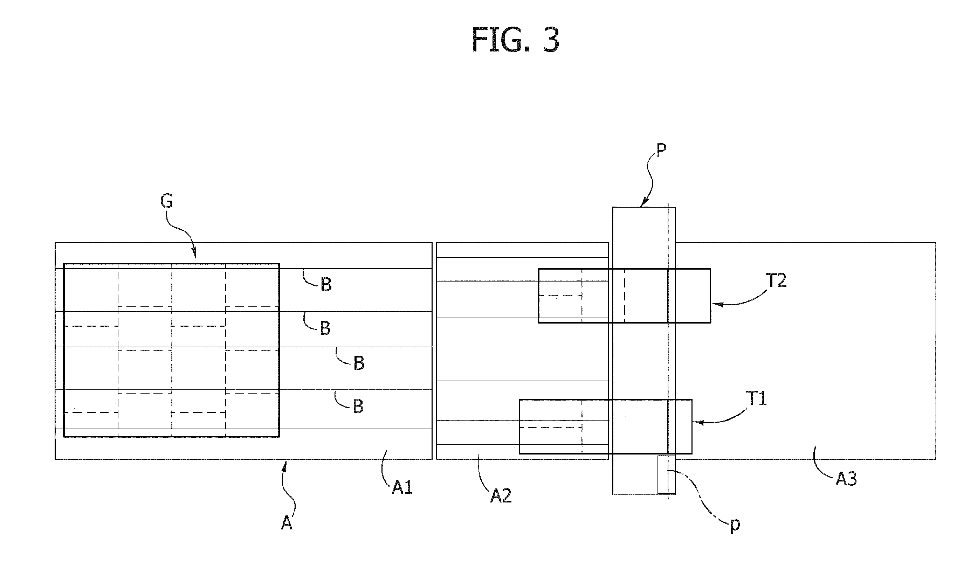

Figure 3 is a schematic plan view of a machine of the same type as that of Figure 2, which is, however, controlled so as to perform the cuts Y and Z on two cross portions (for example, T1, T2) simultaneously, in order to increase the productivity.

Machines of this type are provided with an electronic control unit designed to govern the means for advance of the plate, the means for gripping and rotating the portions of plate (if envisaged), and the various devices of the cutting bridge according to a pre-set logic, which depends upon the lay-out of the lines of division of the starting plate G.

Figures 2 and 3 do not show the constructional details of the machine for convenience of representation and in order to render the drawings more readily understandable. As is known to the person skilled in the branch, the machine of course comprises adjustable means for arrest in position, associated to the conveying surface, which are used for stopping the plate G or its portions in the desired position underneath the cutting bridge P in order to perform cutting of portions of a pre-set size of the plate. Said arrest means are, for example, constituted, according to the known art, by arrest elements projecting through slits of the conveying surface and designed to engage the front edge of the portions of plate as these are set in a position corresponding to the cutting bridge so as to stop them in the desired position. Said arrest elements are typically carried, for example, by an auxiliary bridge set transverse with respect to the longitudinal direction of the machine and mobile underneath the conveying surface, by motor-driven means that are also controlled by the electronic control unit.

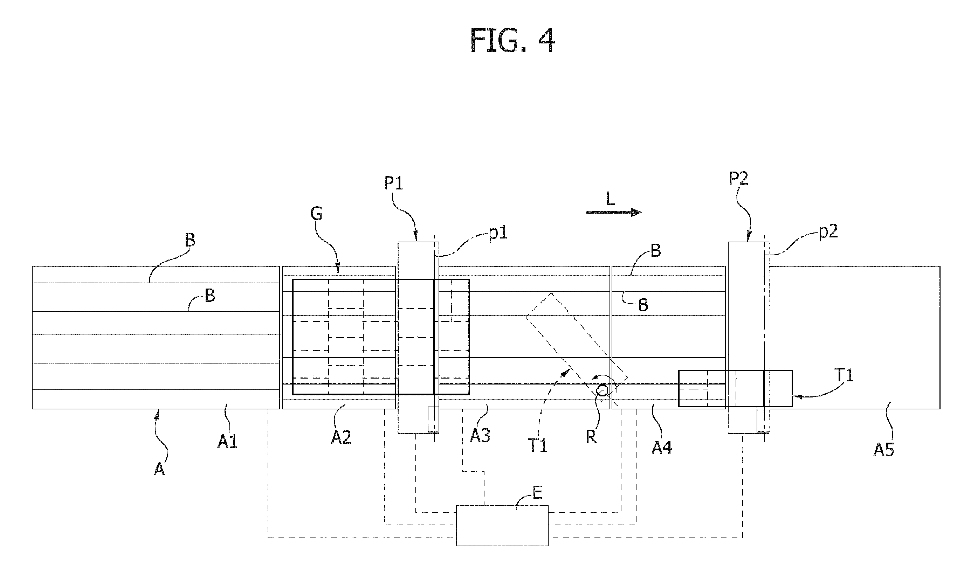

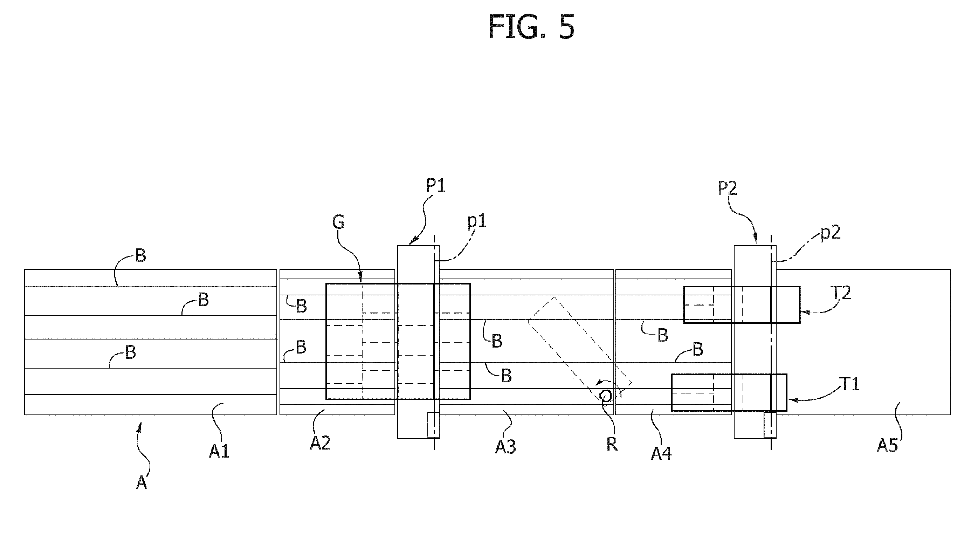

Figure 4 illustrates a further example of machine according to the known art, in which two cutting bridges P1, P2 are provided downstream of one another in the longitudinal direction L. The first bridge P1 is used, in said known machines, only for making the cuts in X that generate the cross portions T, whereas the second cutting bridge P2 is used for making the cuts Y and Z on the cross portions T, after prior rotation through 90° of the cross portions by means of an automatic gripping and rotation device R. Also in this case the second cutting bridge P2 can be used for subdividing the two or more cross portions T1, T2, etc., simultaneously (see Figure 5).

Figure 4 is also a schematic illustration of the electronic control unit already described above, which is programmed for controlling, according to a pre-set logic, operation of the conveyor belts of the various sections of the conveying surface, of the various devices of the cutting bridges, of the device R for rotation of the cross portions and of the arrest means (not illustrated) for positioning correctly the portions of plate underneath each cutting bridge.

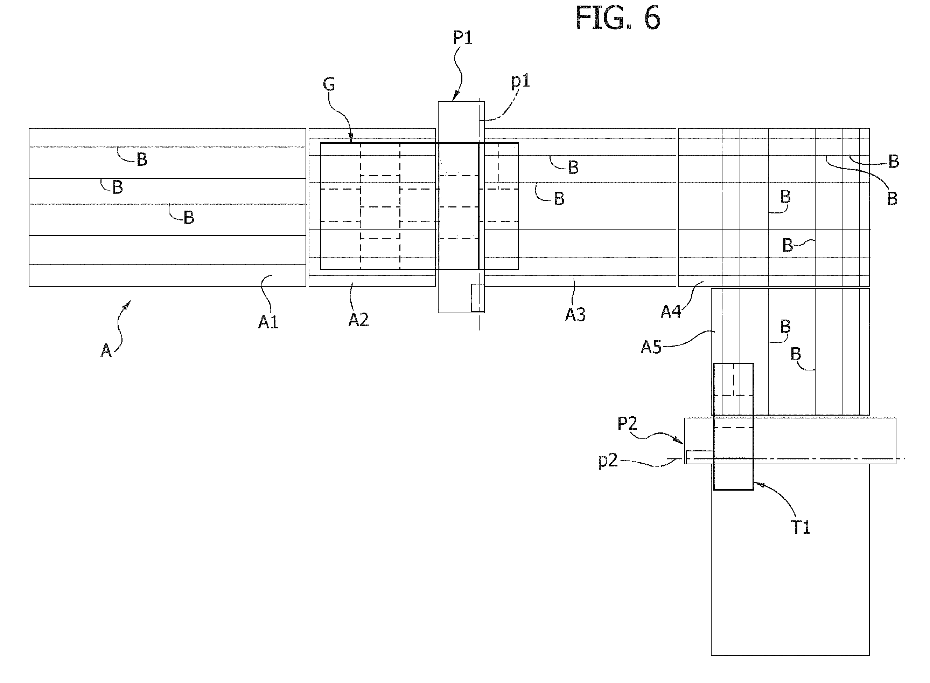

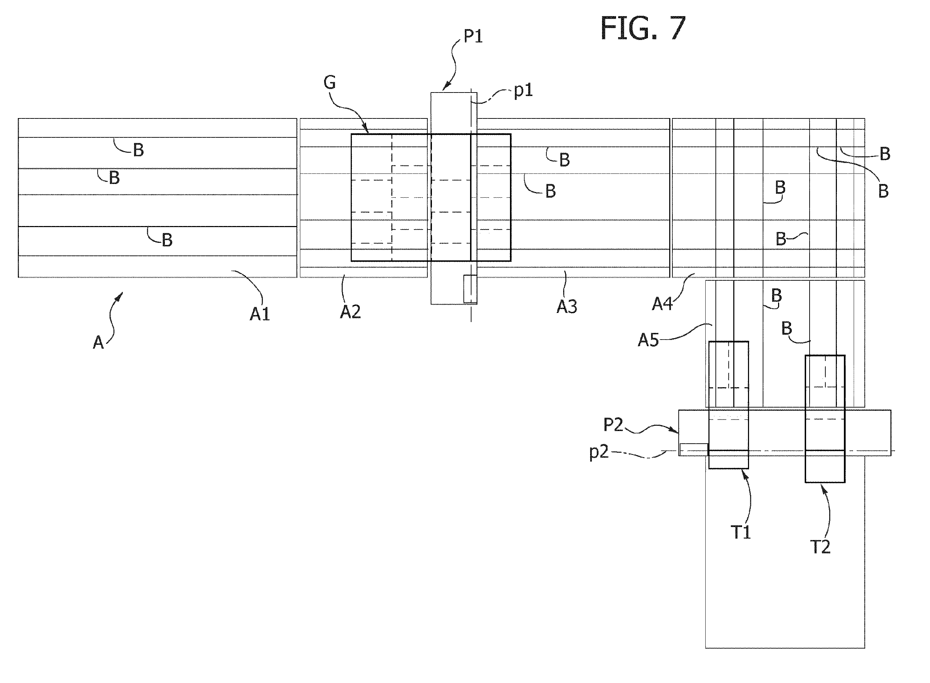

Figure 6 shows another known solution in which the second cutting bridge P2 is set along a line oriented at 90° with respect to the line of the first bridge P1 in order to prevent rotation of the cross portions T after cutting performed in the first bridge P1. Figure 7 shows the variant of the same machine, where the second cutting bridge P2 is used for subdividing a number of cross portions T1, T2 simultaneously.

The known machines illustrated in Figures 4-7 have a higher productivity than those with a single cutting bridge of Figures 2 and 3, but in any case present various drawbacks.

In the first place, the first cutting bridge performs only the cuts X, remaining unproductive at least for 50% of the time taken for processing the plate. With reference, for example, to the lay-out of Figure 1, the first cutting bridge P1 must carry out five cutting operations, each of which entails, prior thereto, an operation of positioning of the plate in the correct position for cutting, whilst the second cutting bridge must carry out twenty cutting operations (eighteen in Y and two in Z), each after prior positioning of the portion of plate in the required position. For the purposes of the time involved in the separation, the width of the plate or of the cross portion is practically of no effect because the time for setting the plate in the correct position does not change (it is identical for any width of glass), and as regards the time required for the entire cycle of operations necessary for cutting, only the functions of scoring and breakout of the bottom plate of glass entail an increase of duration (which in any case is not even proportional to the increase in size).

In the second place, in the case of the known machines of the type illustrated in Figures 3, 5, and 7, the second cutting bridge is not used only for the functions of scoring, breakout, and separation, but also for the functions of positioning of the additional cross portion underneath the second cutting bridge, synchronization of the cutting operations, and advance of the cross portions.

In addition, with the known machines of the type indicated above, the lay-out of the scoring lines must be as homogeneous as possible, so as to prevent as far as possible a highly significant lack of uniformity in the dimensions of the various portions in which the plate is to be divided.

Finally, with the machines of the type indicated above it proves burdensome and difficult to provide a number of outputs in parallel for the finished portions of plate and it is moreover difficult to provide for automatic unloading of the portions of plate.

In general, the productivity of known machines of the type indicated above is penalized and conditioned by the reduced productivity of the first cutting bridge and by the degree of efficiency of the second cutting bridge. If the second cutting bridge has to carry out functions not regarding the pure cutting process (such as, for example, positioning of the cross portions and synchronization of the cutting operations) the productivity of the entire line is consequently impaired.

### Objects of the invention

The object of the present invention is to overcome the drawbacks of the known art by providing a machine for cutting plates of laminated glass that will guarantee a high productivity.

A further object of the invention is to provide a machine for cutting plates of laminated glass that will not require a substantial homogeneity of the dimensions of the individual portions in which the plate is to be divided for the purposes of a high productivity.

A further object of the invention is to achieve the aforesaid results with a relatively simple and low-cost structure.

### Summary of the invention

With a view to achieving the above objects, the subject of the invention is a machine according to the annexed Claim 1.

### Brief description of the drawings

Further characteristics and advantages of the invention will emerge from the ensuing description with reference to the annexed plates of drawings, which are provided purely by way of non-limiting example and in which:
- Figure 1, already described above, illustrates an example of lay-out of division of a plate of laminated glass;
- Figures 2-7, already described above, are schematic plan views of machines according to the known art for cutting plates of laminated glass;
- Figures 8-11 are schematic plan views of a first embodiment of the machine according to the invention, in different conditions of operation;
- Figures 12-23 are schematic plan views of a preferred embodiment of the machine according to the invention; and
- Figures 14, 18B, 20B, 21B, 22B, 22C, and 23B are schematic side elevations of an accumulation section forming part of the machine according to the invention, in different conditions of operation;
- Figure 24 is a schematic perspective view at an enlarged scale of the aforesaid accumulation section;
- Figure 25 is a further view at an enlarged scale of a detail of Figure 24; and
- Figure 26 is a side elevation of the accumulation section.

### Description of some embodiments of the invention

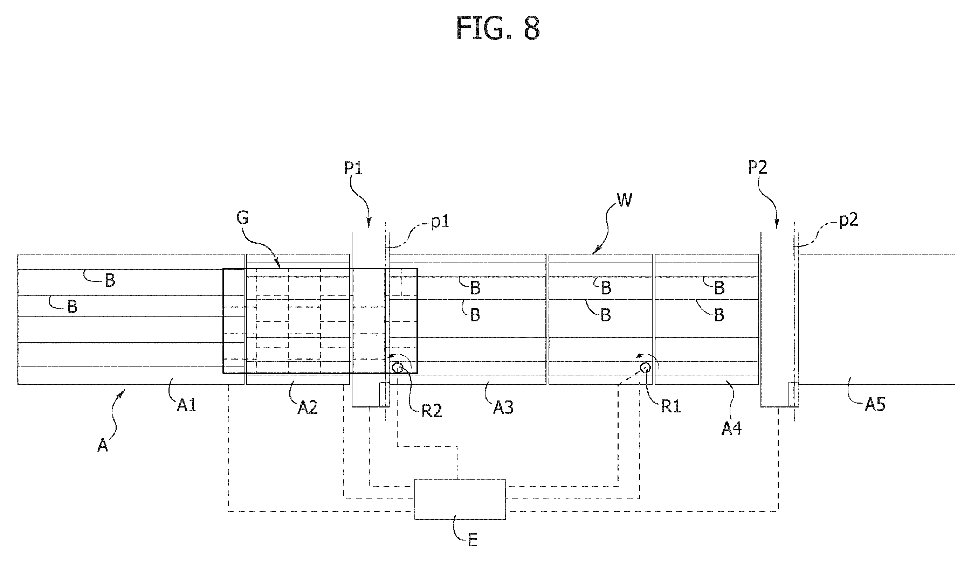

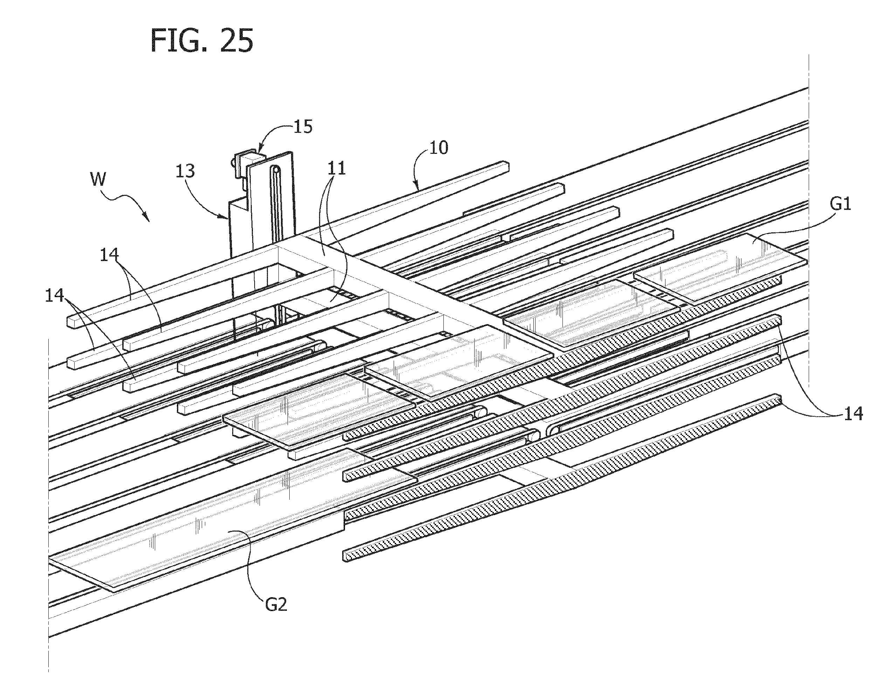

Figures 1-7, regarding the known art, have already been described above. In Figures 8-26, the parts common to those of Figures 2-7 are designated by the same reference numbers. As already indicated above with reference to Figures 2-7, also in Figures 8-26, the constructional details of the machine have not been illustrated, both in so far as they can be provided in any known way and in so far as their elimination from the drawings renders the latter more readily understandable. In particular, the details of the belts for conveying the plates on the conveying surface, the details of the devices provided at each cutting bridge, the details of the devices for imparting rotation through 90° on the cross portions, and the details of the arrest means for setting the plate in the correct position underneath each cutting bridge have not been illustrated. All the aforesaid parts can be provided in any of the ways known to persons skilled in the branch.

### First embodiment

Figure 8 shows in plan view a machine according to the invention that differs from the known machine illustrated in Figure 4 mainly in that the control unit E is programmed so as to use the first cutting bridge P1 not only for making cuts in X, but also for making cuts in Y and Z so as to reduce the dead times in which the first cutting bridge P1 is not used to a minimum.

The machine illustrated in Figure 8 comprises a waiting/accumulation section W set between the first cutting bridge P1 and the second cutting bridge P2 on which portions of plate cut in the first cutting bridge P1 can be stopped, waiting to undergo further cutting at the second bridge P2.

Moreover, in the example of Figure 8, two devices R1, R2 for rotation of the portions of plate are provided, set downstream of one another. Specifically, the device R1 is set in the waiting section W, whilst the device R2 is set immediately downstream of the first cutting bridge P1.

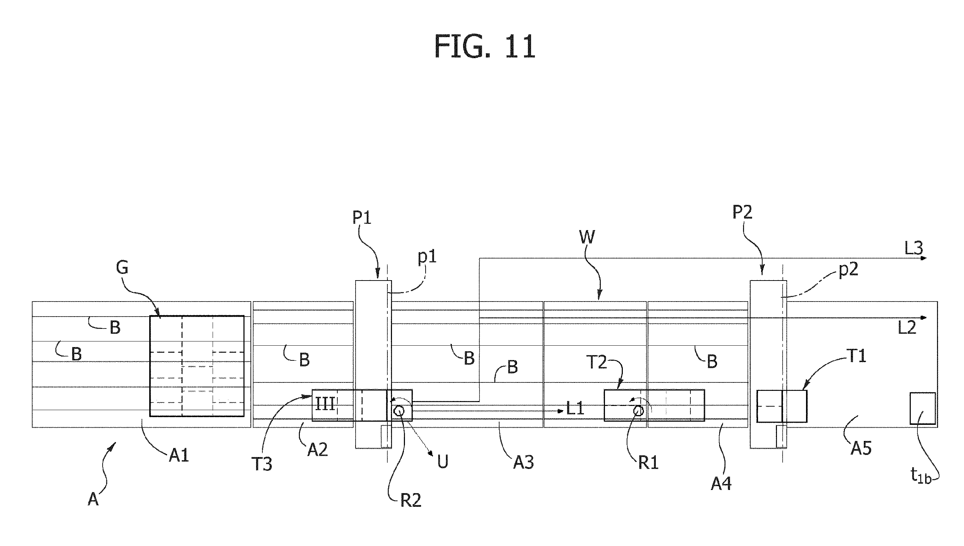

Since the first cutting bridge P1 is exploited for making also cuts in Y and Z, finished portions of plate can be obtained already at the first cutting bridge P1, as will emerge more clearly from the ensuing description. In this case, the finished portions of plate can even not advance along the conveying surface A through the second cutting bridge P2. The machine according to the invention can, in fact, be provided with means (of any known type, not illustrated) for unloading finished portions of plate directly downstream of the first cutting bridge P1, as will be described in greater detail with reference to Figure 11.

With reference to the operating cycle of the machine of Figure 8, said figure illustrates the machine at start of the process, with the plate of laminated glass G positioned for cutting the first cross portion at the first cutting bridge P1.

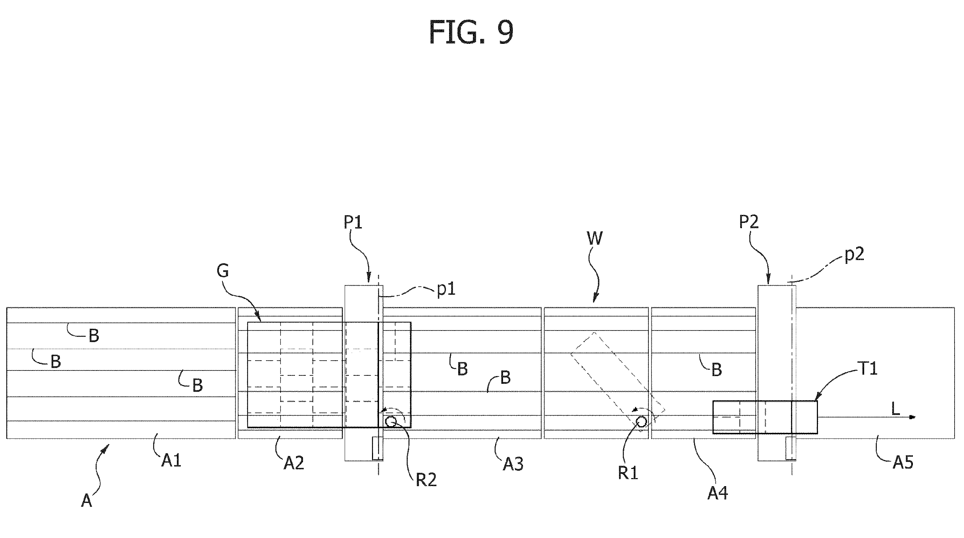

Figure 9 shows the machine in the step in which the first cross portion cut T1 has been already rotated through 90° via the device R1 and has been positioned underneath the second cutting bridge P2 for performing the first cut in Y, whilst the plate D has been positioned underneath the first cutting bridge P1 for cutting the second cross portion T2.

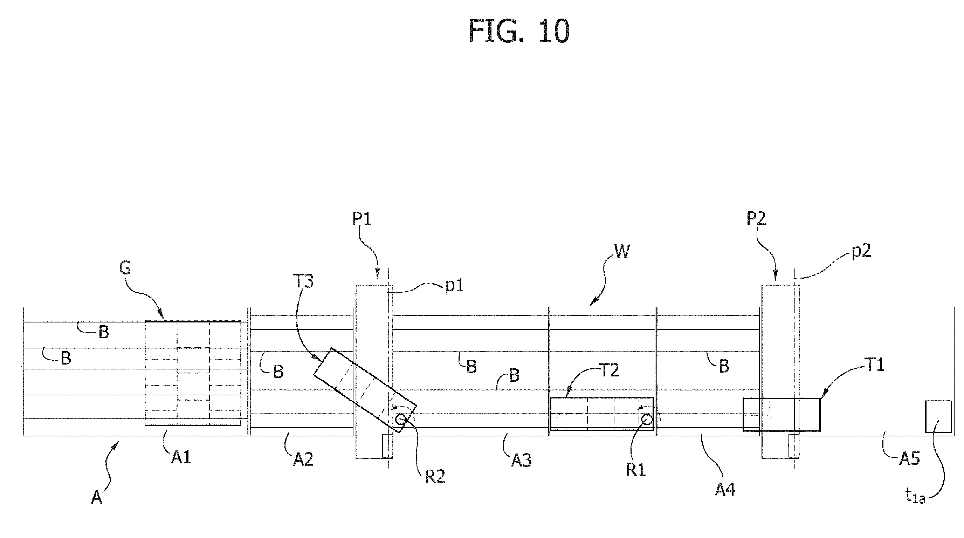

Figure 10 illustrates a further step, in which the first finished portion of plate t₁ₐ has been made to advance longitudinally towards the output of the machine, after execution of the first cut in Y. The remaining portion of the cross portion T1 has been positioned underneath the second cutting bridge P2 to perform the second cut in Y. The second cross portion T2 cut by the first cutting bridge P1 has been rotated through 90° via the device R1 and is stationary in the waiting section W, waiting for being bed to the second cutting bridge P2, whilst the first cutting bridge P1 has already cut a third cross portion T3, which is rotated through 90° via the device R2 to enable execution of the cuts in X and Y on the third cross portion T3 via the first cutting bridge P1 itself.

Figure 11 illustrates a further step, in which the second cutting bridge P2 is continuing to carry out subdivision of the first cross portion T1, a second finished portion of plate t_{1b} being already in the proximity of the output of the machine. The second cross portion T2 is advancing towards the second cutting bridge P2 in so far as the latter is terminating subdivision of the first cross portion T1. The first cutting bridge P1 is carrying out subdivision of the third cross portion T3.

The same sequence of steps illustrated in Figures 8-11 is followed for the cross portions T4, T5, T6.

The finished portions of plate obtained already with the first cutting bridge P1 (as in the case of the portions of the third cross portion T3 in Figure 11) can be directly unloaded from the machine immediately downstream of the first cutting bridge P1 (as indicated schematically by the arrow U) without passing through the second cutting bridge P2. The portions of plate cut by the first bridge P1, which require instead a further division at the bridge P2, can be fed through the second bridge P2 in the direction indicated by the arrow L1 in Figure 11. If necessary, it is possible to feed towards the second cutting bridge P2 two portions of plate in parallel, according to the directions L1 and L2. Finally, it is possible to provide a line for unloading the portions of plate at output from the first cutting bridge P 1 parallel to the machine, in the direction of the arrow L3 of Figure 11.

Of course, in the waiting section W, it is possible to position a number of portions of plate in parallel, while they are waiting to be fed to the second cutting bridge P2.

The electronic unit E is programmed for optimizing the operating cycle so as to minimize or eliminate altogether the dead times in which the first cutting bridge P1 is not used. As is evident from the foregoing description, said result is obtained in the first place in so far as the machine according to the invention preferably envisages exploitation of the first cutting bridge P1 not only for the cuts in X, but also for the cuts in Y and Z. The electronic control unit E is programmed accordingly. In the example of Figures 8-11, the aforesaid advantage is enhanced by the fact that two devices for rotation of the portions of plate R1, R2 are provided downstream of one another and can thus operate simultaneously, and by the fact that there is provided the waiting/accumulation section W, one of the two rotation devices R1 being preferably provided in said section W.

### Second preferred embodiment

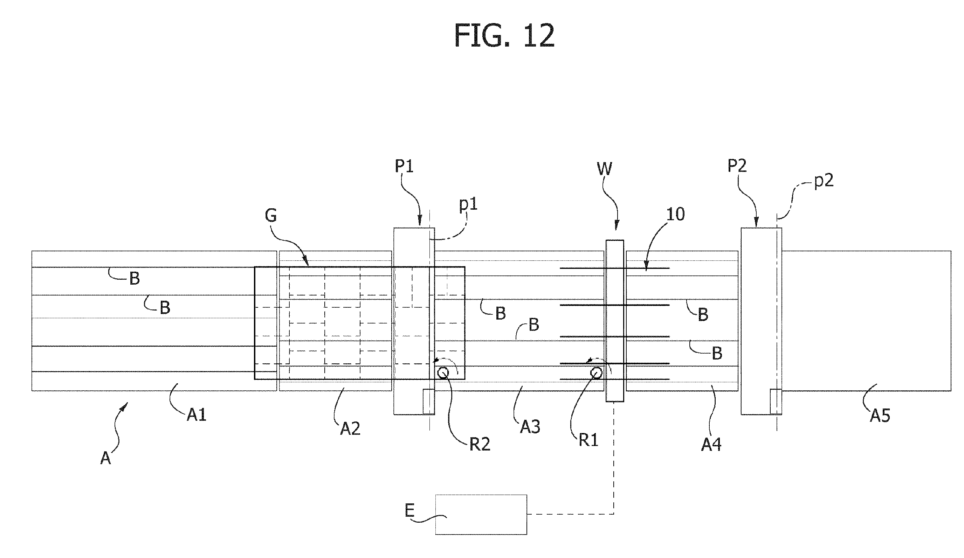

Figures 12-26 illustrate a preferred embodiment of the invention that preserves all the characteristics described above with reference to Figures 8-11, with the difference that in this case the waiting/accumulation section W is provided with a rack structure with compartments set on top of one another, said rack being vertically mobile and provided with a high capacity for storage of cross portions or portions of plate.

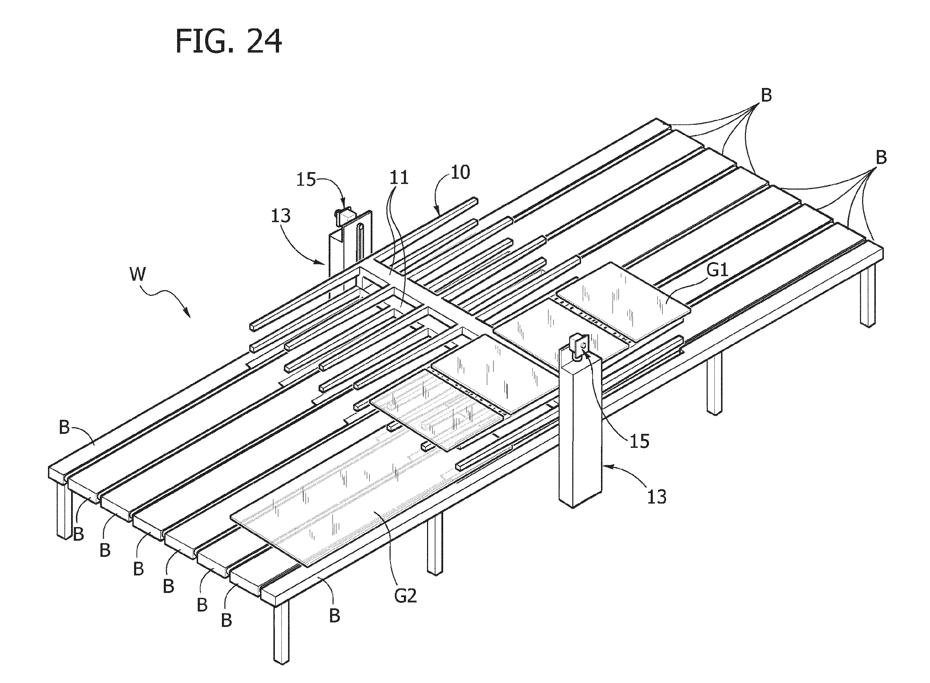

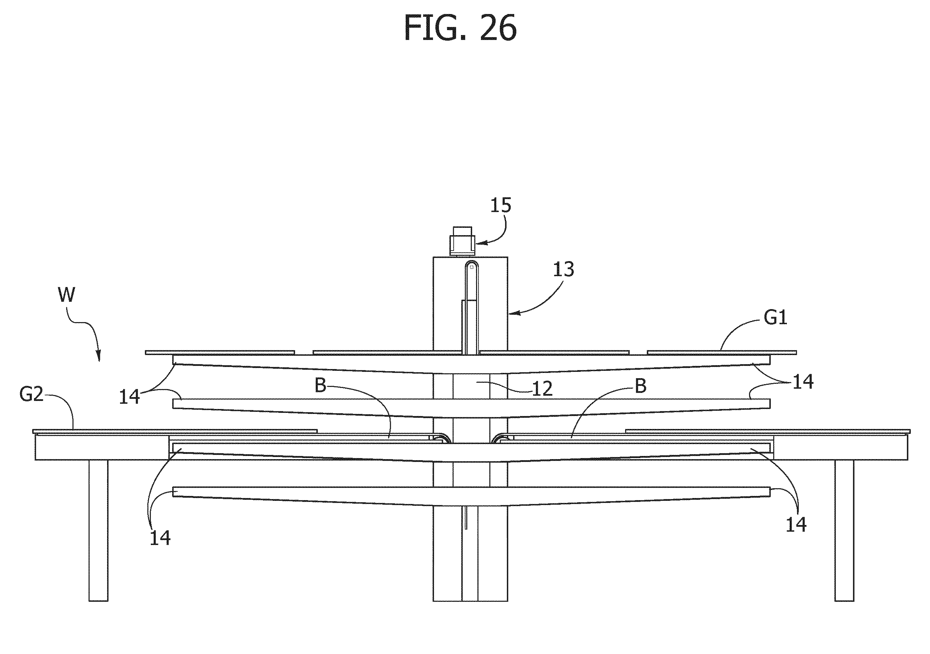

Figures 24-26 show an example of embodiment of the waiting/accumulation section W. The reference number 10 designates as a whole the rack structure comprising a plurality of cross members 11 set on top of one another and at a distance apart, rigidly connected at their ends to two lateral uprights 12 (see Figure 26), which are guided vertically on two fixed lateral supporting columns 13. Extending longitudinally from the cross members 11, in the two opposite directions, are supporting arms 14 that are consequently set at levels on top of one another and spaced apart.

The two supporting columns 13 are provided at the top with motor means 15 for governing vertical displacement of the rack 10. The mechanical drive between the output shaft of the motor assemblies 15 and the structure of the rack 10 may be of any one known type, for example, of the belt type (as illustrated schematically in the drawings) or of the type with external thread/internal thread and may envisage motors and/or actuators, which are also of any known type. The motor means are controlled by the electronic unit E that supervises positioning of the rack 10 in the desired vertical position in each operating step of the machine.

Of course, the specific operating cycle of the machine depends upon the lay-out of division of the plate of laminated glass G (Figure 1).

Figures 12-23 show an example of operating cycle of the preferred embodiment of the machine according to the invention.

Figure 12 shows the machine in the initial step of the process, with the plate of laminated glass G positioned underneath the first cutting bridge P1 for cutting the first cross portion T1.

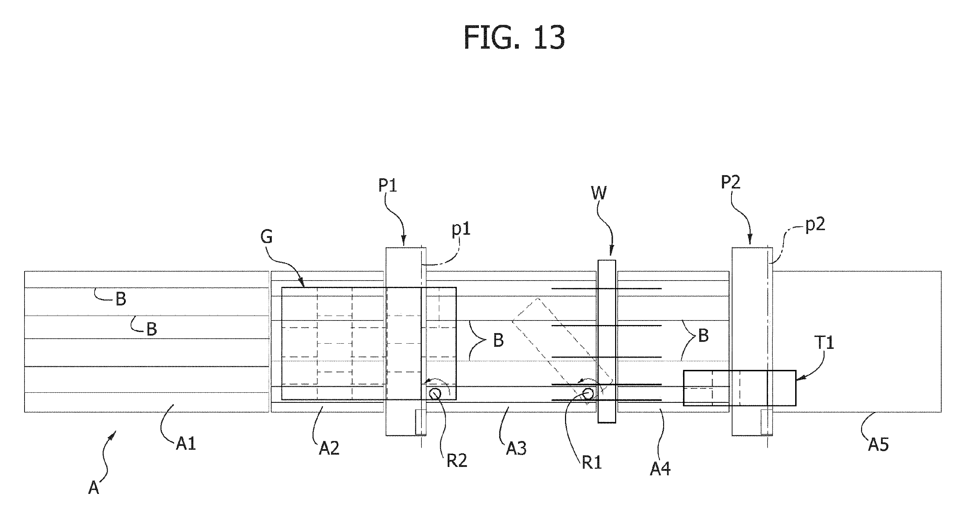

Figure 13 shows a subsequent step of the method, in which the first cross portion T1 has already been cut and rotated through 90° via the device R1 and then fed to the second cutting bridge P2 for execution of the first cut in Y. The plate G is positioned underneath the first cutting bridge P1 for cutting the second cross portion.

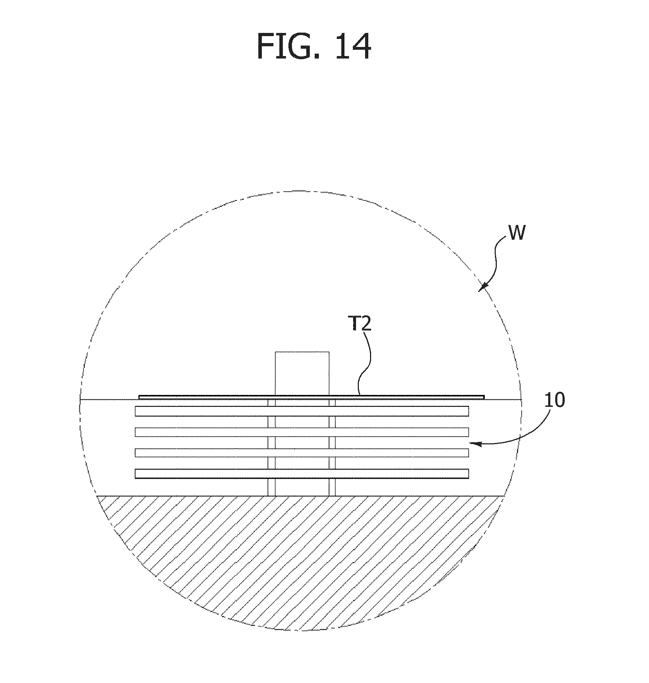

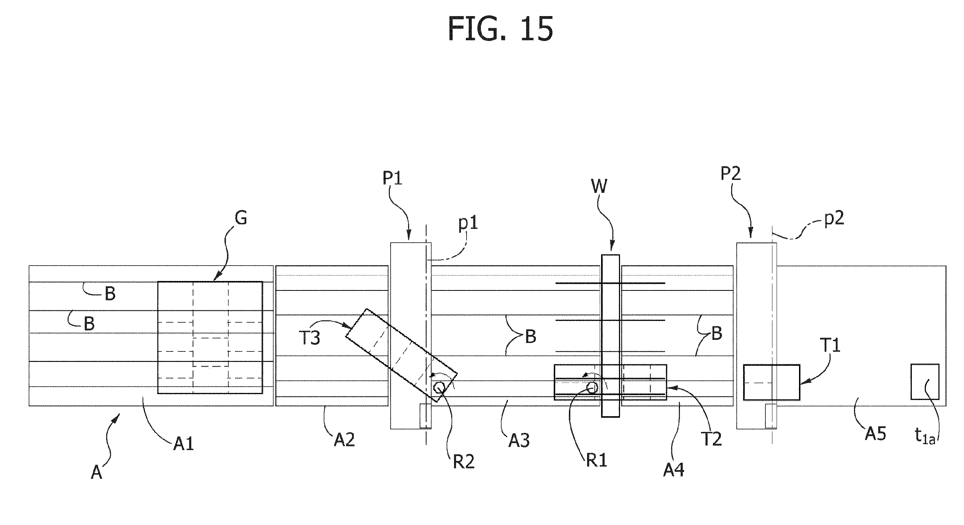

Figure 14 is a schematic view at an enlarged scale of the detail of the accumulation section W, where the rack 10 is in its lowest position, in which the uppermost level of arms 14 is set flush with the surface for conveying the plates so as to receive thereon the second cross portion T2 that has been in the meantime cut by the first cutting bridge P1 and rotated through 90° via the device R1 or the device R2. Said condition is illustrated in Figure 15, which shows that the second cutting bridge P2 has meanwhile started subdivision of the first cross portion T1, whilst the first cutting bridge P1 has performed cutting the third cross portion T3, which is then rotated through 90° via the device R2.

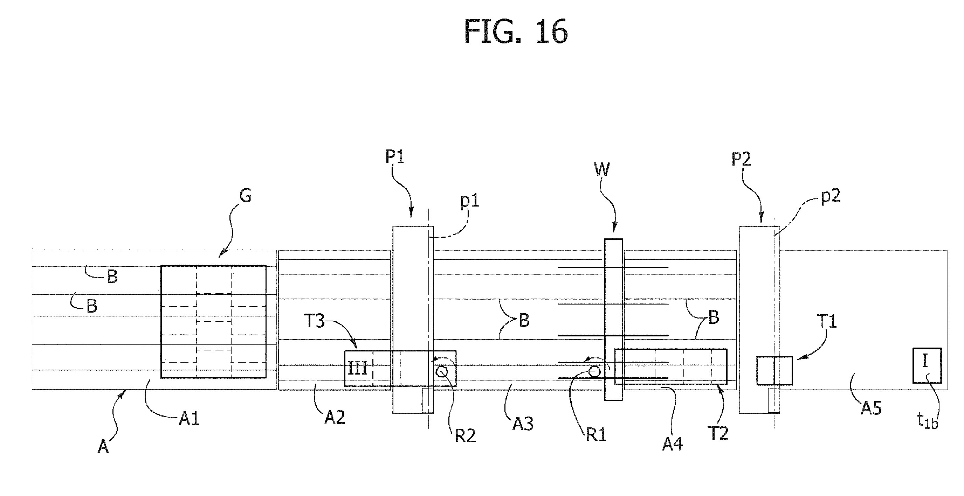

Figure 16 shows the subsequent step in which subdivision of the first cross portion T1 in the first cutting bridge P2 is almost terminated so that the second cross portion T2 is fed to the second cutting bridge P2, whilst the first cutting bridge P1 starts subdivision of the third cross portion T3 by means of cuts in Y and Z.

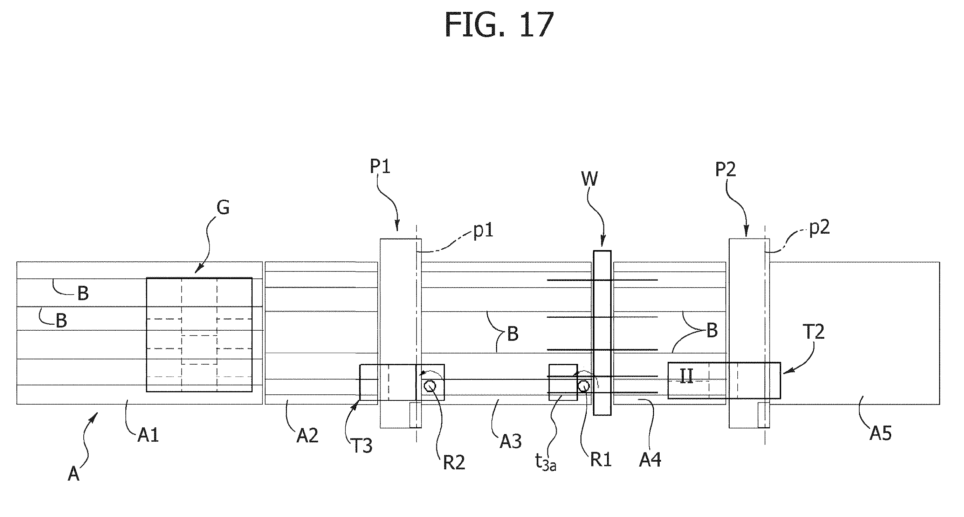

Figure 17 shows a subsequent step in which the second cross portion T2 is positioned underneath the second cutting bridge P2 for it to be subdivided, whilst a first portion t₃ₐ of the third cross portion T3 cut by the first cutting bridge P1 has been positioned on the top level of the rack 10 in the accumulation station W.

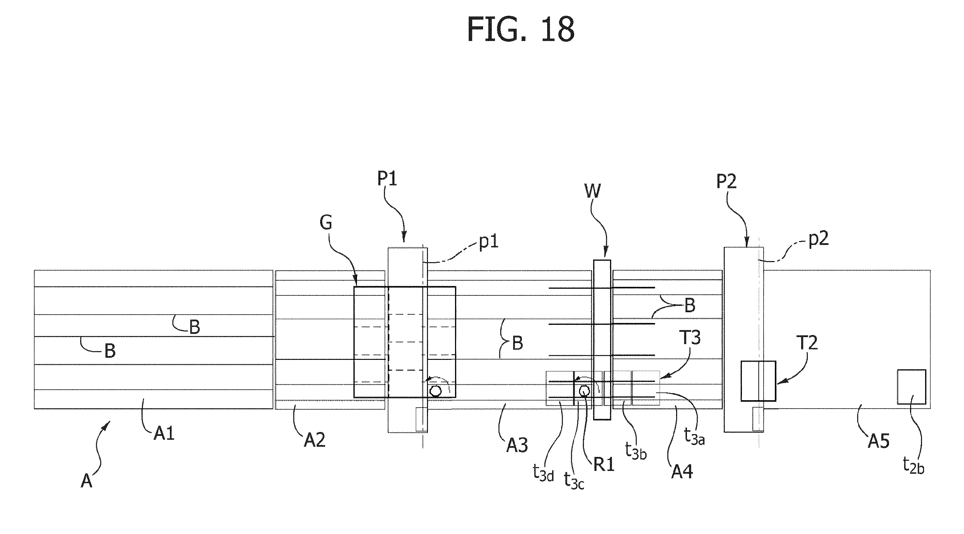

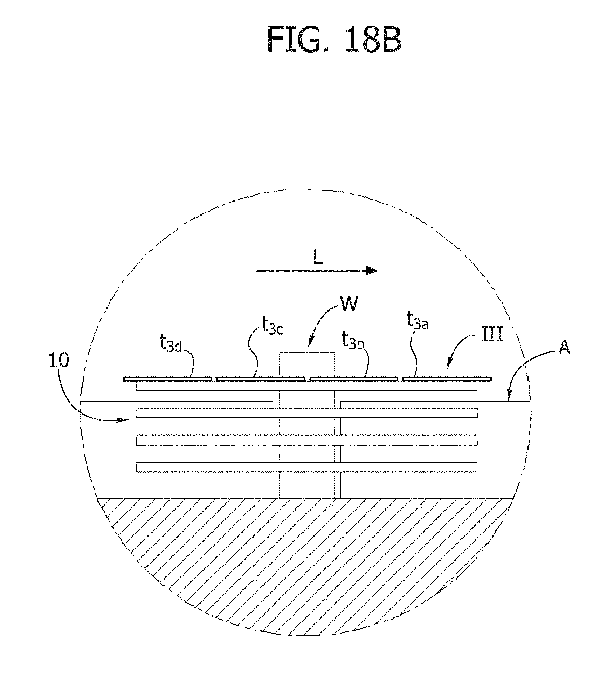

Figure 18 shows a subsequent step, in which the second cutting bridge P2 is completing subdivision of the second cross portion T2, whilst all the portions cut t₃ₐ, t_{3b}, t_{3c}, t_{3d} of the third cross portion T3 are positioned on the top level of the accumulation section W, and the plate G is positioned underneath the first cutting bridge P1.

Figure 18B is a side elevation at an enlarged scale of the accumulation section W, which shows a subsequent step in which the rack 10 has been raised by one level so that the portions of the third cross portion T3 overly the surface for conveying the plates so as to enable passage of further portions of plate underneath them, in the direction of the second cutting bridge P2.

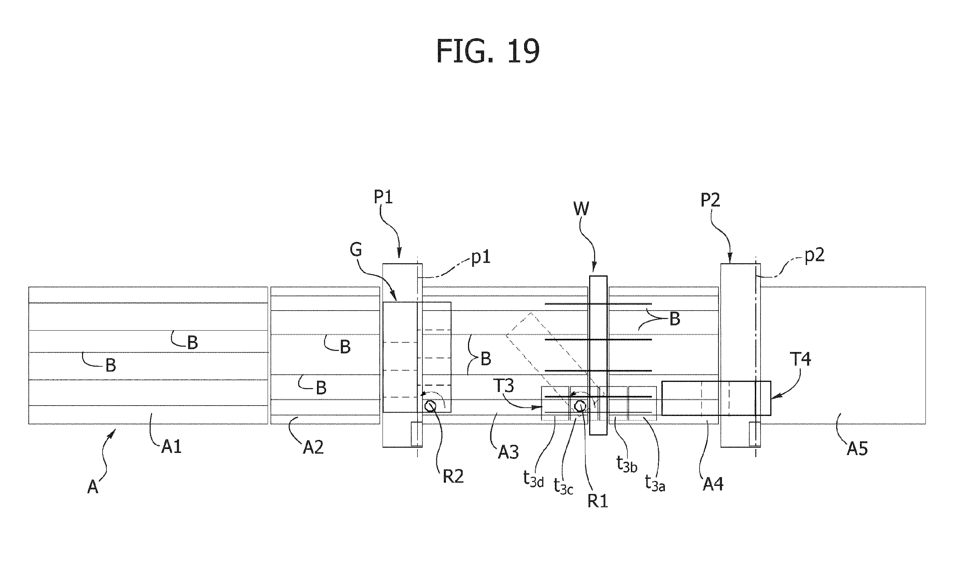

Figure 19 shows a further step in which the portions of plate of the third cross portion T3 remain in their overlying position, whilst a fourth cross portion T4 cut by the first cutting bridge P1 has reached the second cutting bridge P2 passing through the accumulation section W, underneath the portions of the third cross portion T3.

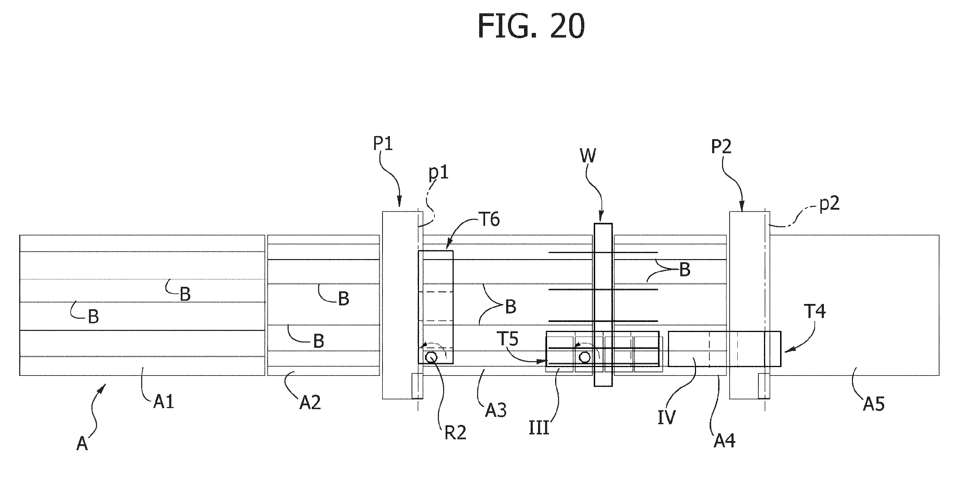

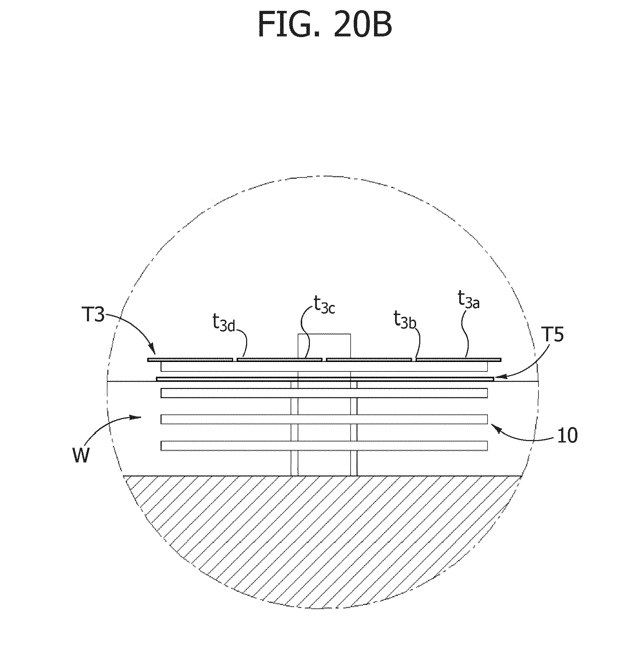

Figure 20 shows a further step, in which a further cross portion T5 cut by the first cutting bridge P1 is passing through the accumulation section W, whilst the portions of plate of the third cross portion T3 remain in the overlying position (Figure 20B) and the fourth cross portion T4 is at the second cutting bridge P2.

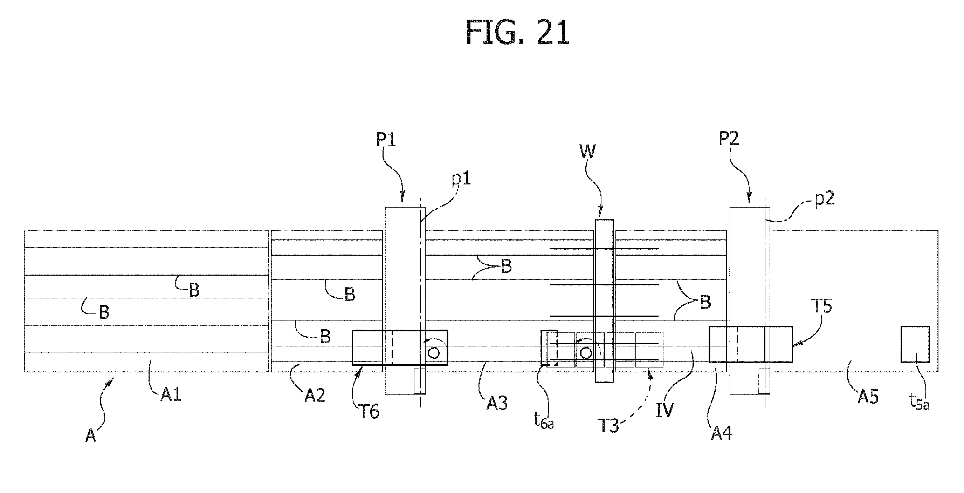

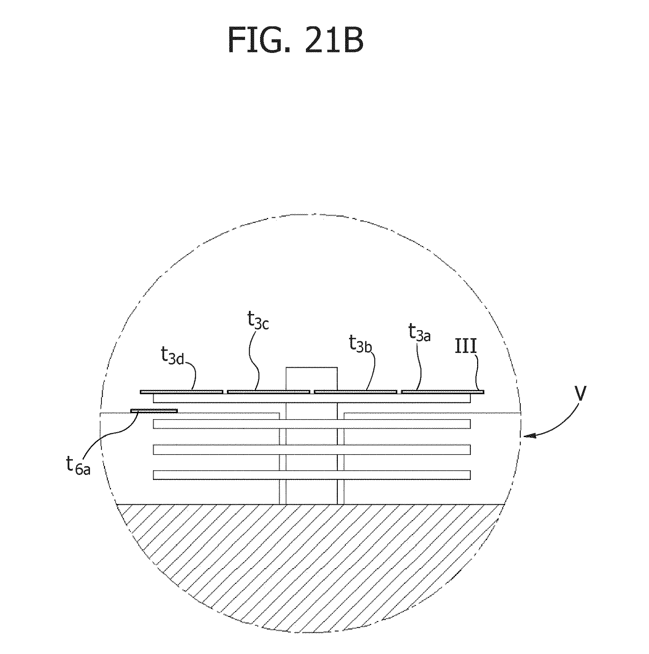

Figures 21 and 21B show the step in which the second cutting bridge P2 is subdividing the fifth cross portion T5, whilst the portions of the third cross portion T3 are still in the accumulation section W, and the portions of the sixth cross portion T6, which are divided via cuts in Y by the first cutting bridge P1, pass underneath the portions of the third cross portion T3.

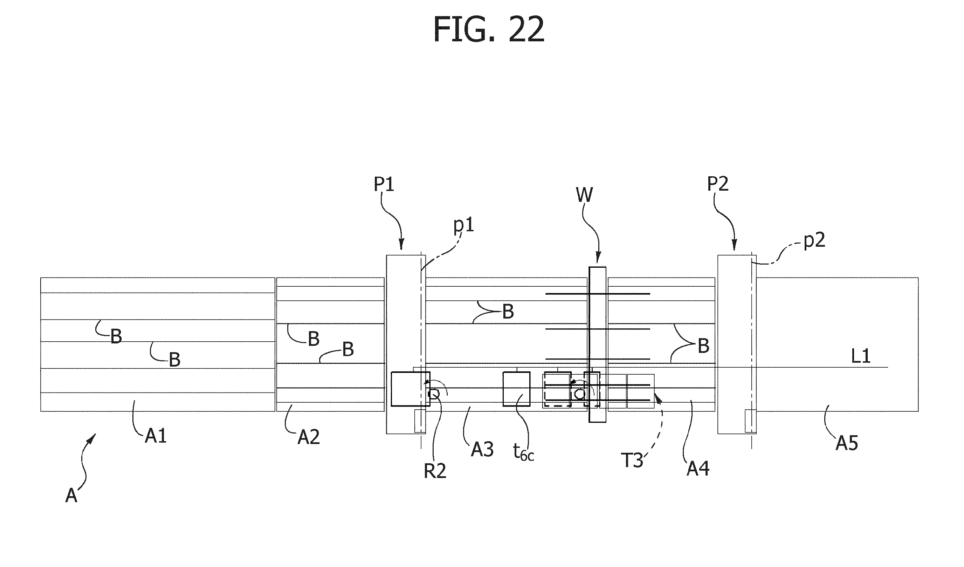

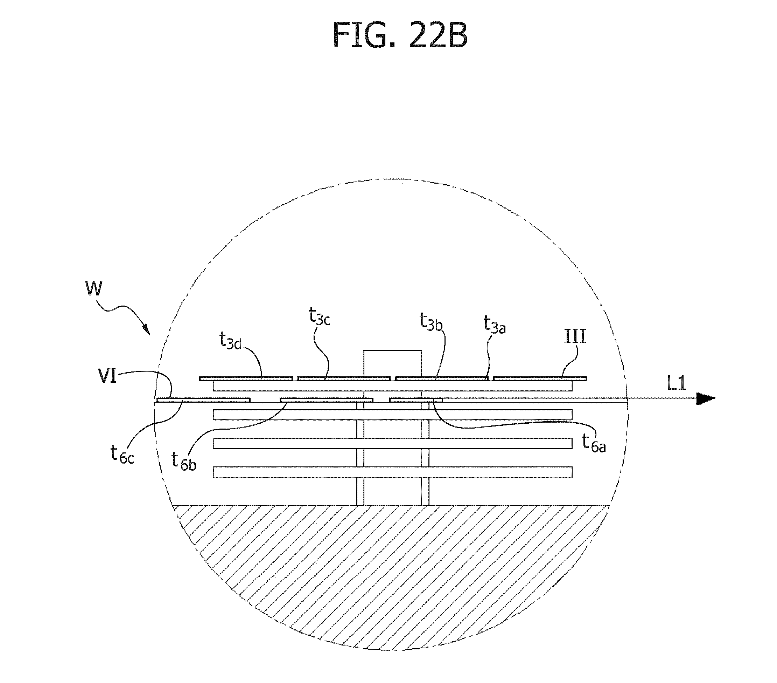

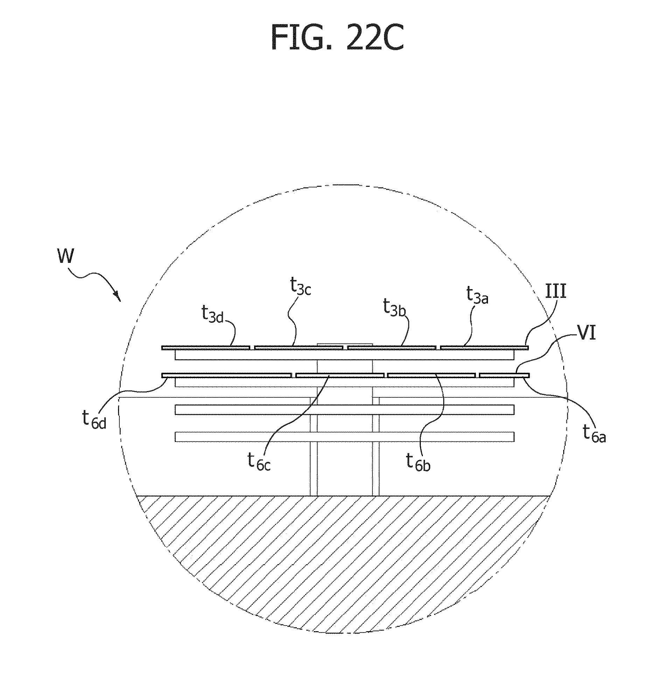

Figures 22 and 22B show the step in which the portions of the sixth cross portion T6, respectively t₆ₐ, t_{6b}, t_{6c}, are fed in the direction L1 towards the output of the machine, passing underneath the second cutting bridge P2, whilst the portions of the third cross portion T3 are still in the overlying position in the accumulation section W.

Figure 22C shows an alternative possibility, in which the portions of the sixth cross portion T6, instead of being fed to the second cutting bridge P2, are stored in the accumulation section W, and are set overlying the conveying surface. This is done in the case where the second cutting bridge P2 is still occupied by other portions of plate.

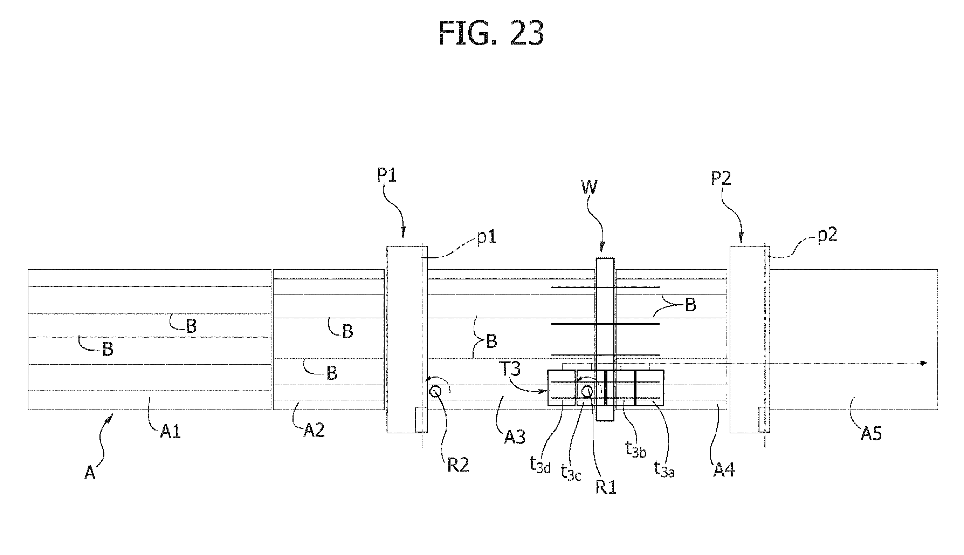

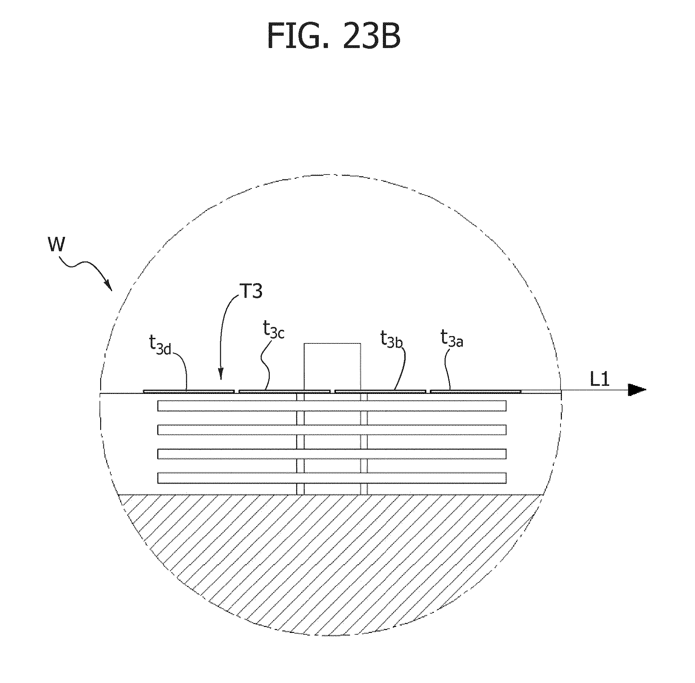

Figures 23 and 23B show a final step in which only the portions of the third cross portion T3 have remained on the accumulation section W, and the rack 10 is lowered until the plane of said portions of plate is brought to the level of the conveying surface to enable feeding of the portions of the third cross portion T3 in the direction L1 towards the output of the machine. In the case where any of said portions has to undergo a further cutting operation in Z, the cut is made by the second cutting bridge P.

Of course, the sequence described above is provided purely by way of example, in order to show the high degree of flexibility of the machine, which enables programming of the cutting cycle and feed of the portions of plate in an optimal way, according to the layout of division of the entire plate of laminated glass G (Figure 1).

For simplicity, the foregoing description has been provided with reference to the case in which the portions of plate are all unloaded by feeding them in the main direction L1. However, as has already been mentioned above, portions of plate can be unloaded also directly downstream of the first cutting bridge P1, according to the directions indicated schematically in Figure 11.

Of course, without prejudice to the principle of the invention, the details of construction and the embodiments may vary widely with respect to what has been described and illustrated herein purely by way of example, without thereby departing from the scope of the present invention.

In particular, the teachings of the invention are can obviously be adapted also to the case of a machine with the two cutting bridges set at 90°, as in the case of Figure 7. In this case, a single rotation device R can be provided adjacent to the first cutting bridge, for rotating the cross portions that are to undergo further division by the first cutting bridge.

## Claims

1. A machine for cutting a plate (G) of laminated glass, comprising:
- a conveying surface (A) for conveying the plate of laminated glass (G) and the portions cut therefrom, provided with means (B) for feeding the plate (G) or portions of plate thereon in a longitudinal direction (L) of the machine;
- a cutting bridge (P1) set in a fixed position over the conveying surface (A) and set transverse with respect to said longitudinal direction (L) for carrying out operations of cutting of the plate (G) along a cutting line (p₁) of the machine, transverse with respect to said longitudinal direction (L);
- at least one device (R1) for imparting a rotation through 90° in the horizontal plane on a portion of plate in the form of a cross portion (T) after this has been obtained by means of an operation of cutting in the cutting bridge, so that said cross portion (T) can in turn be divided into sub-portions, and
- electronic means (E) for governing said means (B) for feeding the plate along the conveying surface (A), said cutting bridge (P1), and said at least one device for rotation of the plate (R),
- said machine being **characterized in that** it further comprises a waiting section (W) located after said cutting bridge (P1), wherein said waiting section (W) includes a rack (10) defining a number of superimposed compartments vertically spaced from each other, said rack (10) being vertically displaceable, so as to bring any of said compartments at the level of said conveying surface, for accumulating a plurality of portions of plate on said compartments.

2. Machine according to claim 1, **characterized in that** said electronic means (E) are configured for controlling also the vertical movement of said rack (10).

3. Machine according to claim 1, **characterized in that** said rack (10) comprises a plurality of superimposed and vertically spaced apart cross members (11), rigidly connected at their ends to two lateral uprights (12), which are guided vertically on two fixed lateral supporting columns (13), a plurality of supporting arms (14) extending longitudinally in both directions from each cross members (11) so as to define said compartments.

4. Machine according to claim 3, **characterized in that** said waiting section (W) comprises motor means (15) for governing vertical displacement of the rack (10).
